# EUROPÄISCHE PATENTSCHRIFT

(11) **EP 3 584 174 B1**
(45) Veröffentlichungstag und Bekanntmachung des Hinweises auf die Patenterteilung: **11.08.2021**
(21) Anmeldenummer: 19181079.5
(22) Anmeldetag: 19.06.2019
(51) Int. Cl.: B64F 1/22

(54) **SCHLEPPSTANGE MIT ELEKTRISCHER BEWEGUNGS-VORRICHTUNG FÜR DAS SCHLEPPSTANGEN-FAHRWERK**
TOWBAR WITH ELECTRICAL MOVEMENT DEVICE FOR TOWBAR SUSPENSION
FLÈCHE DE REMORQUAGE POURVUE DE DISPOSITIF DE MOUVEMENT ÉLECTRIQUE POUR LE TRAIN D'ATTERRISSAGE À FLÈCHE DE REMORQUAGE

(30) Priorität: 20.06.2018 DE 102018114873
(43) Veröffentlichungstag der Anmeldung: 25.12.2019
(73) Patentinhaber: JMS AG Jet Maintenance & Service, 77933 Lahr/Schwarzwald (DE)
(72) Erfinder: Korward, Matthias, 77652 Offenburg (DE)
(74) Vertreter: Weickmann & Weickmann PartmbB

(56) Entgegenhaltungen:
- FR-A5- 2 199 699
- US-A1- 2014 161 579

## Beschreibung

### I. Anwendungsgebiet

Die Erfindung betrifft eine Schleppstange, mittels der auf dem Flughafen-Vorfeld stehende Luftfahrzeuge, insbesondere Flugzeuge, rangiert werden, indem die Schleppstange einerseits am Bugfahrwerk des Flugzeuges befestigt wird und andererseits an einem Zugfahrzeug, insbesondere einem Rangier-Traktor, und mittels des Traktors das Flugzeug in die gewünschte Position geschoben oder gezogen wird.

### II. Technischer Hintergrund

Dabei besteht das grundsätzliche Problem, dass der Schlepper über die Schleppstange sowohl Zug- als auch Schubkräfte in das Bugfahrwerk einbringen kann, durch die das Bugfahrwerk überlastet und beschädigt werden kann, und ebenso Torsionskräfte um die Hochachse des Fahrwerkes.

Um dies zu vermeiden, ist in der Schleppstange eine Sollbruchstelle in Form mindestens eines Scherstiftes - meist zwei quer zur Längsmitte der Schleppstange symmetrisch mit Abstand zueinander angeordnete Scherstifte oder zwei in Längsrichtung hintereinander angeordnete Scher Stifte - eingebaut, dessen oder deren Abscherkraft so niedrig liegt, dass ein vom Flugzeughersteller vorgegebener maximal zulässiger Belastungswert für das Bugfahrwerk des jeweiligen Flugzeugtyps nicht erreicht wird, sondern vorher der Scherstift bricht.

Da je nach zu bewegendem Flugzeug-Typ und gegebenenfalls auch je nach einzusetzendem Zugfahrzeug zumindest verschiedene Scherstifte, oft auch verschiedene Schleppstangen eingesetzt werden müssen, stehen in der Regel eine ganze Reihe unterschiedlicher derartiger Schleppstangen bereit.

Da diese Schleppstangen auch alleine, vorzugsweise manuell, gezogen oder geschoben werden müssen - beispielsweise ist das Ankuppeln am Bugfahrwerk in den meisten Fällen nur mittels Handkraft erlaubt - verfügen diese in der Regel 3 m - 8 m langen Schleppstangen, die meist zwischen 200 kg und 500 kg wiegen, über ein Fahrwerk, welches in aller Regel aus zwei links und rechts der Längsmitte der Schleppstange angeordneten Rädern besteht, mit denen die Schleppstange auf dem Untergrund verfahren werden kann.

Dabei sind die Räder meist am freien Ende einer an dem Grundkörper der Schleppstange befestigten Schwinge angeordnet, so dass sie zwischen einer zur Schleppstange hin hochgehobenen, deaktivierten Position, und einer gegenüber der Schleppstange nach unten abgesenkten, aktivierten Position verstellbar sind.

Durch nach unten Absenken kann bei einer an einem Ende bereits beispielsweise am Flugzeug befestigten Schleppstange auch das andere Ende der Schleppstange auf eine gewünschte Höhe, beispielsweise die Höhe der Anhängekupplung des Traktors, hochgefahren und eingestellt werden, so dass der Traktor durch Heranfahren an die Schleppstange an diese ankuppeln kann.

Für das Rangieren des Flugzeuges ist das Fahrwerk der Schleppstange angehoben, um eine Berührung mit dem Untergrund zu vermeiden, denn dies würde zusätzliche unerwünschte Kräfte über die Schleppstange in das Bugfahrwerk des Flugzeuges einbringen.

Allerdings sollte vor dem Abkuppeln des Traktors das Fahrwerk der Schleppstange wieder bis zum Kontakt mit dem Untergrund abgesenkt werden, um zu vermeiden, dass nach Lösen der Verbindung zum Bugfahrwerk die Schleppstange auf den Untergrund herabfällt und beschädigt werden kann.

Denn in der Schleppstange sind auch empfindliche Teile verbaut, beispielsweise die Scherstifte oder die Kupplungsteile an den Enden.

In der Regel verfügen derartige Schleppstangen über keine eigene Energieversorgung und auch keinen Energie-Anschluss nach außen, weshalb das Anheben und Absenken des Fahrwerkes manuell durchgeführt werden muss, in der Regel indem über eine Handpumpe ein Hydraulikzylinder entsprechend betätigt wird, was jedoch insbesondere für das Hochheben des Fahrwerks oder gar das Hochstemmen der Schleppstange sehr Kraft- und vor allem Zeit-intensiv ist.

Auch das manuelle Schieben der mehrere 100 Kilo schweren Schleppstange über eine größere Strecke im Freien, beispielsweise bei schlechten Wetterverhältnissen, ist Kraft- und Zeit-intensiv.

Ferner ist es aus der US 2014/0161579 A1 - die den nächstliegenden Stand der Technik bildet - bereits bekannt, das Fahrwerk der Schleppstange motorisch anzuheben und abzusenken mithilfe eines hydraulischen Antriebes, der aus einem hydraulischen Druckspeicher mit Energie versorgt wird, welcher wiederum seinerseits mittels einer Pumpe nachgeladen wird.

### III. Darstellung der Erfindung

### a) Technische Aufgabe

Es ist daher die Aufgabe gemäß der Erfindung, die beschriebenen Nachteile mit möglichst geringem konstruktivem Aufwand zu beheben.

### b) Lösung der Aufgabe

Diese Aufgabe wird durch die Merkmale der Ansprüche 1 und 10 gelöst. Vorteilhafte Ausführungsformen ergeben sich aus den Unteransprüchen.

Hinsichtlich der Schleppstange wird diese Aufgabe dadurch gelöst, dass die Schleppstange zum Ausfahren der Räder von der Schleppstange eine Ausfahrvorrichtung umfasst, die über einen elektrischen Antrieb verfügt und hierfür die Schleppstange eine Stromquelle, insbesondere einen elektrischen Akku, aufweist sowie ein Aktvierungselement zum Aktivieren, insbesondere Ein- und Ausschalten, des elektrischen Antriebes.

Auf diese Art und Weise muss das Fahrwerk nicht mehr manuell ausgefahren werden, insbesondere zwischen seiner eingefahrenen, deaktivierten Stellung und seiner ausgefahrenen, aktivierten Stellung hin und her bewegt werden, sondern dies wird kräftesparend von dem elektrischen Antrieb übernommen.

Das Aktivierungselement, mit dem mindestens das Ein- und Ausschalten des Antriebs der Ausfahrvorrichtung, vorzugsweise auch die Bewegungsrichtung de gewählt wird, kann sich direkt an der Schleppstange befinden, vorzugsweise an einem oder beiden seiner Endbereiche, und / oder davon entfernt und lediglich drahtlos mit dem elektrischen Antrieb verbunden, beispielsweise vom Bediener am Körper getragen oder auch fest installiert am oder im Schlepper, insbesondere in der Fahrerkabine.

Dadurch kann von der entsprechenden Stelle oder auch, insbesondere bei mehreren vorhandenen Aktivierungselementen, von verschiedenen Stellen aus das Fahrwerk bewegt, insbesondere ein- oder ausgefahren werden, beispielsweise vor dem Lösen der Schleppstange zwischen Schlepper und Flugzeug das Fahrwerk ausgefahren werden, bis seine Räder den Untergrund erreichen.

Da der Bediener bei einem Aktivierungselement in der Fahrerkabine dies von dort aus erledigen kann, ohne auszusteigen, beschleunigt dies den gesamten Ablauf des Schleppens oder Schiebens eines Flugzeuges, zumal auch die Geschwindigkeit der Ausfahr-Bewegung des Fahrwerks in der Regel größer ist als bei manuellem Bewirken.

Vorzugsweise umfasst die Ausfahrvorrichtung einen Absolut-Sensor, der entweder das Kontaktieren des Fahrwerks, also dessen Räder, mit dem Untergrund detektieren kann und / oder das Erreichen der vollständig eingefahrenen, deaktivierten Lage des Fahrwerks, was für eine gefahrlose Durchführung der Schlepp- oder Schubvorgänge und insbesondere der Kuppel-Vorgänge wichtig ist.

Es kann weiterhin oder stattdessen ein Differenz-Sensor vorhanden sein, der bei Annäherung des Kupplungsmaules des Schleppers an die Kupplungsöse der Schlepper-Kupplung der Schleppstange die Höhendifferenz und insbesondere auch die Differenzrichtung der beiden Teile zueinander detektiert und auch anzeigt, sodass durch automatisches Aktivieren der Ausfahrvorrichtung in die eine oder andere Richtung diese Höhendifferenz auf Null gebracht werden kann vor dem Ankuppeln des Schleppers.

Das Ankuppeln des Schleppers kann dann vom Bediener aus der Fahrerkabine ohne auszusteigen erledigt werden, insbesondere wenn der Schlepper einen elektrisch ein- oder ausfahrbaren Kupplungsbolzen aufweist, der ebenfalls von der Fahrerkabine aus betätigt werden kann oder einen automatisch einrastenden, federvorgespannten Kupplungsbolzen, der automatische einrastet, wenn sich Kupplungsmaul und Kupplungsöse in der richtigen Kopplungs-Position zueinander kontaktieren.

Vorzugsweise zeigt die Ausfahrvorrichtung auch die Aufbockhöhe des Schleppstangen-Fahrwerks an, insbesondere in der Fahrerkabine, wofür der Absolut-Sensor genutzt werden kann oder spezielle Sensoren vorhanden sein können.

Wenn das Schleppstangen-Fahrwerk links und rechts nur je ein Rad aufweist, wird die Schleppstange - wenn sie an keinem ihrer Enden angekoppelt ist - unabhängig von der Aufbockhöhe mit einem ihrer Endbereich auf dem Untergrund aufliegen, und lediglich die dabei von der Schleppstange eingenommene Neigung gegen dem Untergrund wird durch die Aufbockhöhe beeinflusst.

Die Neigung der freistehenden Schleppstange zu verändern, ohne dass eines ihrer Enden auf dem Untergrund auffliegt ist natürlich nicht möglich mit nur einer Achse des Schleppstangen-Fahrwerks, also nur je einem Rad pro Seite, sondern hierfür müssen zwei Radachsen in Längsrichtung beabstandet vorhanden sein, die dann vorzugsweise über getrennte Ausfahrvorrichtungen verfügen, die dann vorzugsweise wiederum beide elektrisch angetrieben und ansteuerbar sind.

Eine gemeinsame Ausfahrvorrichtung für beide Achsen ist weniger sinnvoll, da dann nur eine immer gleiche Neigung, der Schleppstange möglich ist, vorzugsweise eine immer horizontale Lage, was jedoch in der Praxis nicht zielführend ist, da sich die Kupplungen am Schlepper einerseits und am Bugfahrwerk des Flugzeuges andererseits meist auf unterschiedlichen Höhen befinden.

Um ein manuelles Nachladen des Akku durch den Bediener von außerhalb der Schleppstange zu vermeiden und damit auch einen entleerten Akku dauerhaft zu vermeiden, kann eines der Räder des Schleppstangen-Fahrwerks mit einem elektrischen Generator-Motor drehfest gekoppelt sein, der im Generatorbetrieb, also beim Verfahren der Schleppstange mit ihren Rädern auf dem Untergrund und damit drehenden Rädern, Strom erzeugt und damit den Akku nachlädt.

Ein solcher Generator sollte vorzugsweise seitens des Bedieners ein- und auskuppelbar sein, damit der Bediener beim manuellen Verfahren der Schleppstange nicht zusätzlich den Generator antreiben muss.

Der weitere Vorteil besteht darin, dass ein solcher Generator-Motor bei Stromversorgung durch den Akku auch als elektrischer Motor eingesetzt werden kann und wenigstens eines der Räder und damit das Schleppstangen-Fahrwerk antreiben kann, sodass das Verfahren der Schleppstange alleine, also ohne Schlepper, auf dem Vorfeld nicht mehr durch die Kraft des Bedieners erfolgen muss, sondern dieser lediglich ein Betätigungselement zum Ingangsetzen des elektrischen Fahr-Antriebes und dessen Fahrtrichtung betätigen muss.

Das Betätigungselement zum Auslösen dieses Fahr-Antriebes und Vorgeben der Fahrtrichtung, also Drehrichtung des wenigstens einen angetriebenen Rades, ist vorzugsweise an der Schleppstange angeordnet, und vorzugsweise nahe an der Schlepper-Kupplung vorhanden, und/oder nahe an der Flugzeug-Kupplung, insbesondere nahe an den dort vorhandenen Handgriffen, denn der Bediener wird die Schleppstange alleine in der Regel an einem dieser Enden halten, vorzugsweise an einem der dort hierfür vorgesehenen Handgriffe.

Zusätzlich oder statt dem Aufladen des Akku durch den Generator kann der Akku auch durch Fremdenergie von außen nachgeladen werden, weshalb die Schleppstange auf ihre Außenseite eine elektrischen Anschluss zum Anschließen einer externen Energiequelle aufweist.

Hinsichtlich des Verfahrens wird diese Aufgabe dadurch gelöst, dass mittels einer solchen elektrisch angetriebenen Ausfahrvorrichtung die Räder des Schleppstangen-Fahrwerkes motorisch relativ zur Schleppstange ein- und ausgefahren werden.

Das Ankuppeln der Schleppstange an einem Bugfahrwerk eines Flugzeuges läuft wie folgt ab:

Mittels des - dabei meist rückwärtsfahrenden - Schleppers wird die daran angehängte Schleppstange mit ihrem freien Ende mit der dortigen Flugzeug-Kupplung bis nahe an das Bugfahrwerk herangefahren.

Anschließend wird das Aktivierungselement zum Ausfahren des Schleppstangen-Fahrwerks betätigt, bis sich die Flugzeug-seitige Kupplung der Schleppstange etwa auf Höhe des Kupplungs-Gegenelementes des Bugfahrwerks befindet.

Bei zwei vorhandenen Achsen des Fahrwerks werden natürlich beide Achsen soweit ausgefahren, dass ihre Räder den Untergrund erreichen und trotzdem die genannte Höhenbedingung erfüllt ist.

Anschließend muss die Schleppstange vom Schlepper abgekuppelt werden, da fast überall die Vorschrift existiert, dass die Schleppstange nur manuell an das Bugfahrwerk angekoppelt werden darf, um zu hohe Krafteinleitungen beim Ankuppeln in das Bugfahrwerk zu vermeiden.

Dementsprechend muss anschließend nach dem Abkuppeln vom Schlepper - egal ob dies manuell geschieht oder mittels automatischem Lösen des Kupplungsbolzens am Schlepper - die Schleppstange mit der Flugzeug-seitigen Kupplung mit dem Kupplungs-Gegenelement des Bugfahrwerks in Eingriff gebracht und die Flugzeug-seitige Kupplung geschlossen werden.

Anschließend darf der Schlepper an die Schlepper-seitige Kupplung der Schleppstange herangefahren werden und die Schleppstange wieder ankuppeln, wobei der Bediener zumindest beim Heranfahren in der Fahrerkabine des Schleppers sitzt, vorzugsweise auch während des Ankuppelns, wenn dies nicht manuell erfolgen muss, sondern über entsprechende angetriebene Elemente wie selbstschließender Kupplungsbolzen erreicht werden kann.

Wenn die Schleppstange an beiden Seiten angekuppelt ist, wird das Betätigungselement zum Ingangsetzen der Bewegungsvorrichtung, insbesondere der Ausfahrvorrichtung, betätigt und das Schleppstangen-Fahrwerk in die deaktivierte Stellung bewegt, also in aller Regel die Räder vom Untergrund abgehoben und hochgehoben bis die vollständig deaktivierte Stellung erreicht ist.

Auch dies kann wiederum vorzugsweise durch Betätigen des Auslöseelementes in der Fahrerkabine geschehen.

Erst dann kann der Bediener den Schlepper in Gang setzen und mittels der Schleppstange das Flugzeug in die gewünschte Richtung ziehen oder schieben.

Das Abkuppeln der Schleppstange von einem Bugfahrwerk läuft analog umgekehrt ab:
Zunächst wird das Aktivierungselement zum Ausfahren des Schleppstangen-Fahrwerks betätigt, vorzugsweise von der Fahrerkabine des Schleppers aus, bis die Räder den Untergrund kontaktieren. Bei zwei vorhandenen Achsen des Fahrwerks werden vorzugsweise beide Achsen soweit ausgefahren, dass ihre Räder den Untergrund erreichen.

In den meisten Fällen ist es zulässig, danach die Flugzeug-seitige Kupplung zu lösen, während die Schleppstange am Schlepper angekuppelt ist.

Falls nicht, muss zuvor die Schlepper -seitige Kupplung gelöst und meist der Schlepper etwas auf Abstand zur Schleppstange gefahren werden, und danach die Flugzeug-seitige Kupplung der Schleppstange - meist manuell - geöffnet und vom Bugfahrwerk gelöst werden. Anschließend wird dann die Schleppstange mit der Schlepper-seitigen Kupplung wieder am Schlepper angekuppelt.

Dann kann der Schlepper die Schleppstange zu einer Parkposition bringen und abkuppeln.

### c) Ausführungsbeispiele

Ausführungsformen gemäß der Erfindung sind im Folgenden beispielhaft näher beschrieben. Es zeigen:
- **Figur 1:**: eine bekannte Schleppstange im Einsatz in der Seitenansicht,
- **Figur 2a:**: eine erfindungsgemäße Schleppstange in einer Seitenansicht angehängt an einen Schlepper,

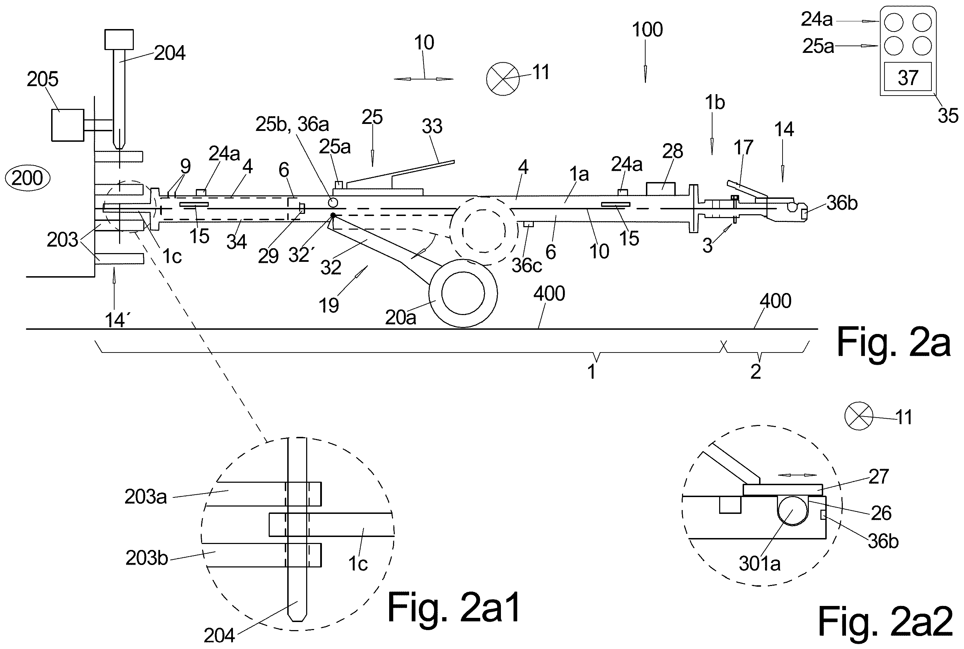

- **Figur 2a1, 2a2:**: vergrößerte Darstellungen aus Figur 2a,

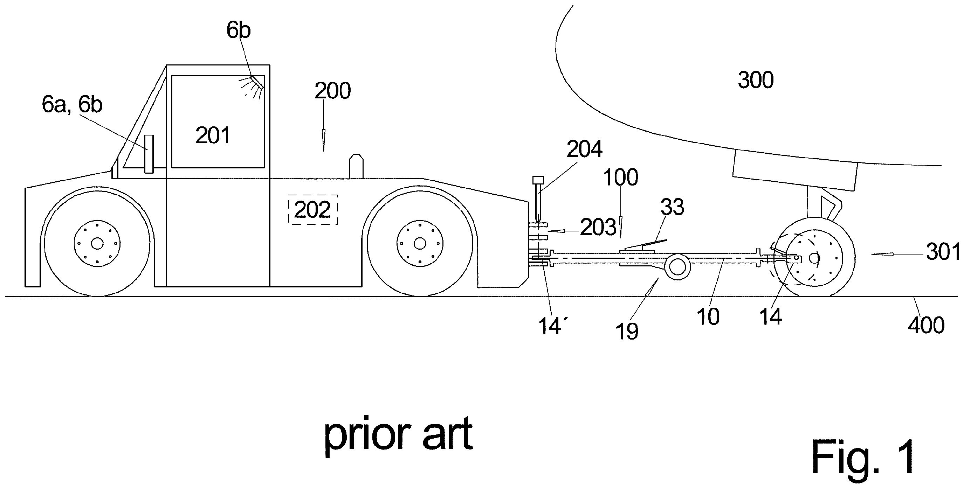

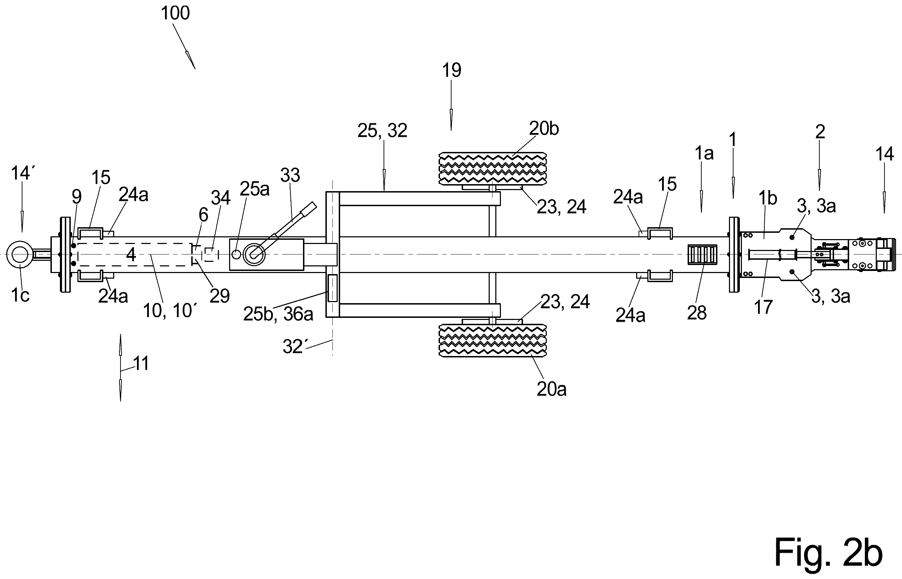

- **Figur 2b:**: eine Aufsicht auf die Schleppstange gemäß Figur 1a,

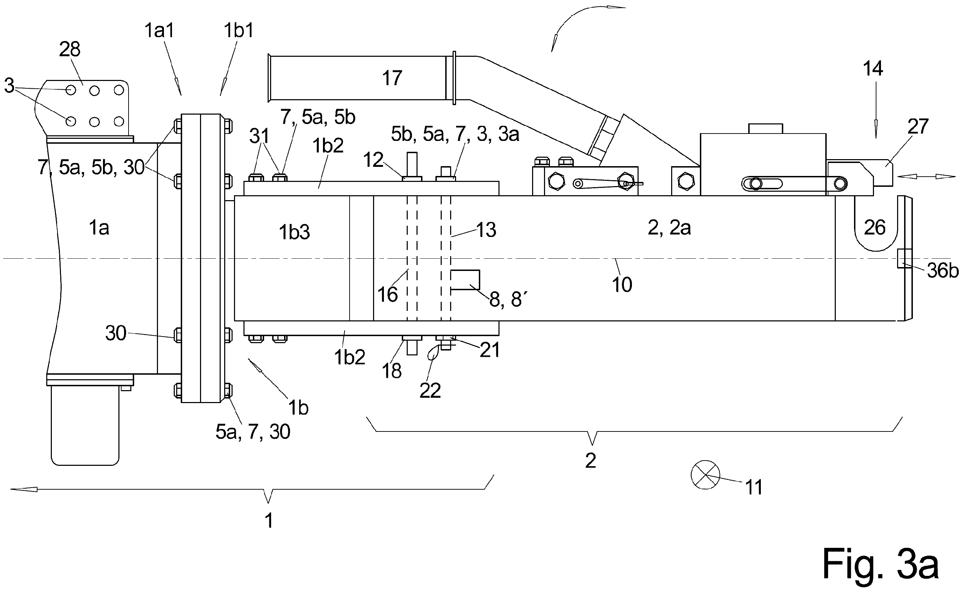

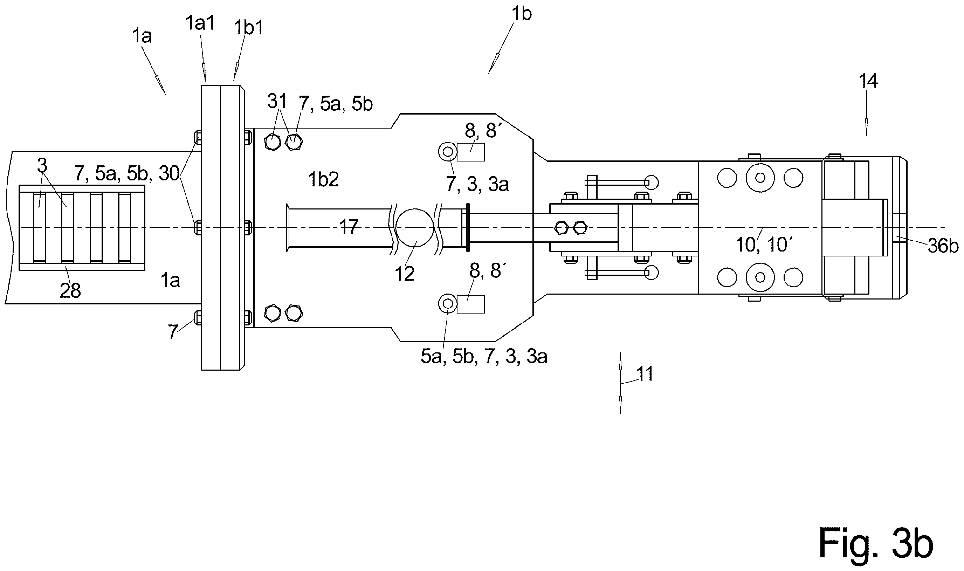

- **Figur 3a, b:**: eine vergrößerte Darstellung des Schleppkopfes der Schleppstange, in Seitenansicht und in der Aufsicht,

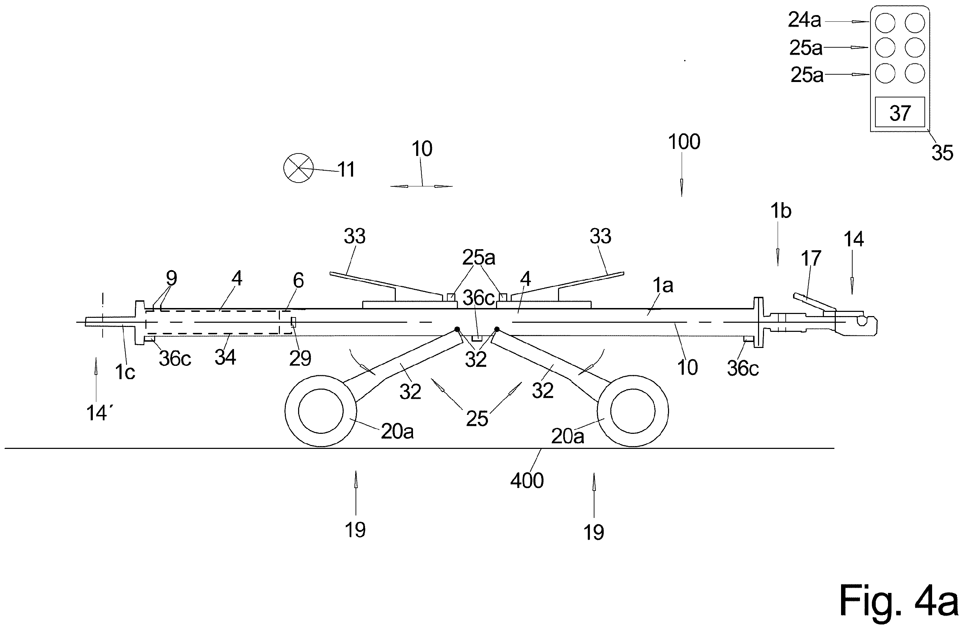

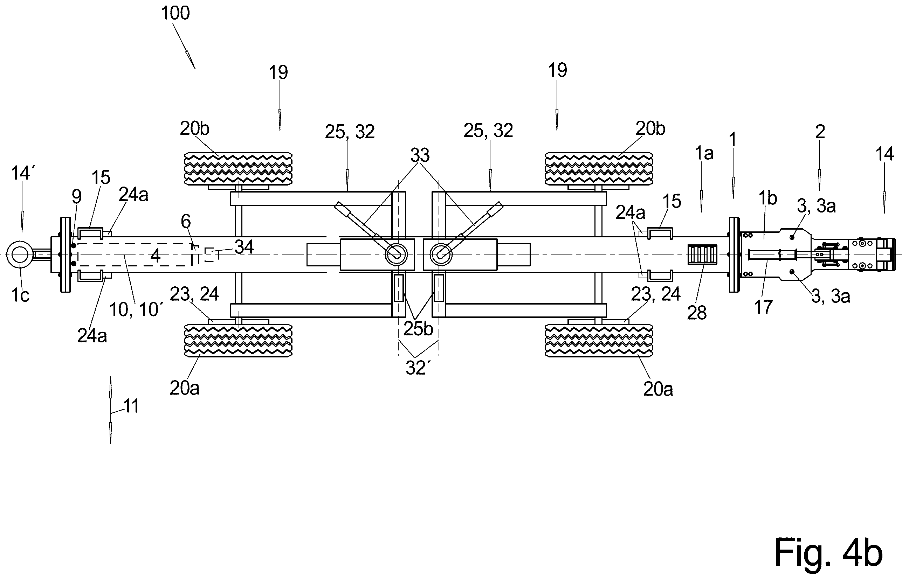

- **Figur 4a, b:**: eine weitere erfindungsgemäße Bauform der Schleppstange in der Seitenansicht und in der Aufsicht.

Zunächst wird der grundsätzliche Aufbau einer bekannten Schleppstange anhand insbesondere der **Figuren 1** **und** **2a** beschrieben:
Die Schleppstange 100 ist in **Figur 1** im Einsatz dargestellt, indem sie mit dem hinteren Fuß vordere Ende mit ihrer Flugzeug-Kupplung 14 am Bugfahrwerk 301 eines Flugzeuges 300 angekuppelt ist und mit dem anderen Ende mit ihrer Schlepper-Kupplung 14' an das Kupplungsmaul 203 eines Schleppers 200 angekuppelt ist. Die Schleppstange 100 hat dabei keinen Kontakt zum Untergrund.

Der Schlepper 200 besitzt eine Fahrerkabine 201, in der ein Fahrer sitzt und mittels üblicher Bedienelemente und eine Fahrzeug-Steuerung 202 des Schleppers 200 dessen Leistung und Geschwindigkeit sowie Richtung steuert.

Die Kupplung am Heck des Schleppers 200 ist eine übliche Maulkupplung mit einem Kupplungsmaul 203 umfassend eine obere und eine untere, etwa horizontal verlaufende Platte, in der sich jeweils fluchtend zueinander Durchgangsöffnungen befinden.

Zwischen die Maul-Platten wird die Anhängeöse 1c am vorderen Ende des Grundkörpers 1 der Schleppstange 100 eingeführt, bis deren vertikal verlaufende Durchgangsöffnung mit den Durchgangsöffnungen in den Maul-Platten fluchtet, und dann durch alle drei Öffnungen hindurch der Kupplungsbolzen 204 geschoben wird und damit die Schleppstange 100 am Schlepper 200 angekuppelt ist.

Die Flugzeug-Kupplung 14 am hinteren Ende der Schleppstange 100 ist ebenfalls formschlüssig ausgebildet:
In der Oberseite der Flugzeug-Kupplung 14 flugzeugshaltigen Endes der Schleppstange 100 befindet sich eine in Querrichtung 11 über die gesamte Breite der Flugzeug-Kupplung 14 an dieser Stelle verlaufende Rinne 26, in die ein Querbolzen 301a, der Bestandteil des Bugfahrwerkes 301 des Flugzeuges 300 ist, eingelegt werden kann.

Auf der Oberseite der Flugzeug-Kupplung 14 ist hier ein Schieber 27 geführt, der zwischen einer die Oberseite der Rinne 26 verschließenden Sicherungsstellung und einer diese freigebende Offenstellung entlang der Flugzeug-Kupplung 14 in Längsrichtung 10 verschiebbar ist mittels eines Schwenkgriffes 17.

In der Schließstellung ist die Schleppstange 100 am Bugfahrwerk 301 angekuppelt, da der Querbolzen 301a nicht mehr nach oben aus der Rinne 26 herausbewegt werden kann, wie am besten in **Figur 2a2** ersichtlich.

Ferner umfasst die Schleppstange 100 ein Schleppstangen-Fahrwerk 19 mit zwei in Querrichtung beabstandet nebeneinander angeordneten Rädern 20a, b, die am freien Ende einer Schwinge angeordnet sind, die durch Verschwenken als Ausfahr-Vorrichtung 25 für die Räder 20a, b dient und mit deren Hilfe die Räder 20 a, b an die Schlepperstange 100 in die deaktivierte Stellung angehoben oder von dieser aus nach unten in die aktivierte Stellung ausgefahren werden können, wie in **Figur 2a** dargestellt.

Wie in Verbindung der **Figur 2a** sowie der **Figuren 3a****,** **b** ersichtlich, besteht die Schleppstange 100 aus einem Grundkörper 1, an dessen einem, dem Flugzeug-seitigen, Ende ein Schleppkopf 2 befestigt ist mittels der die beiden Teile verbindenden Scherstifte 3, deren Bruchbelastbarkeit so ausgelegt ist, dass die auf das Bugfahrwerk 301 des Flugzeuges 300 mittels der Schleppstange 100 übertragbaren Kräfte, bevor die Scherstifte 3 brechen, geringer sind als die zulässigen Grenzwerte.

Zu diesem Zweck besteht der Grundkörper 1 aus einer Basisstange 1a, in aller Regel einem Basisrohr 1a, welches am vorderen Schlepper-seitigen Ende die Anhängeöse 1c trägt, und an deren hinteren, Flugzeug-seitigen Ende eine Schleppkopf-Aufnahme 1b zum Aufnehmen des Schleppkopfes 2 vorhanden ist.

Dabei weist die Basisstange 1 an ihrem hinteren Ende eine Flanschplatte 1a1 und die Schleppkopf-Aufnahme 1b an ihrem vorderen Ende eine Flanschplatte 1b1 auf, die jeweils etwa vertikal stehen und aneinander angelegt und über Verbindungsschrauben 30 miteinander verschraubt sind.

Von dieser Flanschplatte 1b1 der Schleppkopf-Aufnahme 1b ragt zum einen ein Zentralblock 1b3 in Längsrichtung 10 nach hinten ab, auf dessen Oberseite und Unterseite jeweils eine Befestigungsplatte 1b2 über Verbindungsschrauben 31 mit dem Zentralblock 1b3 verschraubt ist und die beide in Längsrichtung 10 nach hinten über den Zentralblock 1b3 vorstehen und damit zwischen sich eine Ausnehmung bilden.

In diese Ausnehmung zwischen die beiden Befestigungsplatten 1b2 ragt das hintere Ende des Zentralkörpers 2a des Schleppkopfes 2 hinein, welches eine Höhe entsprechend der Höhe dieser Ausnehmung entspricht. Der Zentralkörper 2a erstreckt primär ebenfalls in Längsrichtung 10 und trägt an seinem Flugzeug-seitigen Ende die beschriebene Kupplung 14 und auf der Oberseite den Schwenkhebel 17 zum Betätigen der Kupplung.

Bei richtiger Positionierung des Zentralkörpers 2a zwischen den Basisplatten 1b2 und in Längsrichtung 10 noch im Abstand zum Zentralblock 1b3 verlaufen durch alle drei Bauteile, also die Basisplatten 1b2 und den Zentralkörper 2a, mehrere von oben bis unten durchgehende Durchgangsöffnungen 13, 16 hindurch:
Zum einen sind beidseits der aufrecht stehenden Längsmittelebene 10' - in der Aufsicht der **Figur 3b** betrachtet -symmetrisch zueinander je eine Durchgangsöffnung 13 angeordnet und vorzugsweise auf der Längsmittelebene 10' und meist näher am Zentralrohr 1a eine deutlich größere Durchgangsöffnung 16 als Zentralöffnung.

Durch die Durchgangsöffnungen 13 erstreckt sich jeweils ein Scherstift 3 meist mit einem oberen verbreiterten Kopf 3a hindurch, der von oben eingeführt wird und in seinem Überstand über die Unterseite der unteren Basisplatte 1b2 gegen Herausziehen gesichert ist, beispielsweise indem er dort eine Querbohrung 21 aufweist, durch die ein Sicherungsstift 22 geschoben wird, oder indem dort eine Sicherungsmutter 18 auf geschraubt ist.

Bevor zu hohe Kräfte vom Schlepper 200 über die Schleppstange 100 auf das Bugfahrwerk 301 übertragen werden, wird einer der Scherstifte 3 oder gar beide abscheren und die Verbindung zwischen dem Grundkörper 1 und dem Schleppkopf 2 der Schleppstange 100 verloren gehen.

Damit diese Teile in einem solchen Fall nicht voneinander getrennt werden, verläuft durch die zentrale Durchgangsöffnung 16 die in der Aufsicht betrachtet auch langlochförmig und in Längsrichtung 10 verlaufend ausgebildet sein kann, ein Fangbolzen 12 hindurch, der meist ebenfalls von oben eingeführt wird und einen oberen verbreiterten Kopf besitzt und an der Unterseite mittels einer Sicherungsmutter 18 gegen unbeabsichtigtes Herausziehen gesichert ist.

Durch einen definierten Abstand der Scherstifte 3 zur Längsmittelebene 10' kann auch besser die Übertragung von Torsionskräfte um die Längsachse verhindert werden als durch einen zentralen einzigen Scherstift.

Der Fangbolzen 12 besitzt eine wesentlich höhere Bruchlast als die Scherstifte 3, würde also nicht brechen, sondern die Verbindung zwischen den beiden Teilen 1 und 2 der Schleppstange 100 aufrecht erhalten. Dennoch würde der Fahrer des Schleppers 200 den Bruch des Scherstiftes 3 durch einen auftretenden Schlag bemerken.

Lediglich der Vollständigkeit halber soll klargestellt werden, das natürlich auch die Verbindungsschrauben 30 und 31 eine höhere Bruchlast aufweisen als die eingesetzten Scherstifte 3, die passend zu dem jeweils zu bewegenden Flugzeugtyp ausgewählt, aus einem Magazin 28 auf der Oberseite der Basisstange 1a entnommen und in die Durchgangsöffnungen 13 gesteckt und dort gesichert werden.

Erfindungsgemäß soll die Ausfahr-Vorrichtung 25 zum Ausfahren des Schleppstangen-Fahrwerks 19, also deren Räder 20a, b, nach unten und zurück mittels eines Ausfahr-Motors 25b betätigt werden.

Das Betätigungselement 25a hierfür, beispielsweise ein Taster oder ein Schalter, kann an der Schleppstange 100 möglichst in der Nähe des Schleppstangen-Fahrwerks 19 befestigt sein, jedoch kann das Aus- und Einfahren auch mittels einer Fernbedienung 35 - wie in **Figur 2a** dargestellt - über Betätigungselemente 25a, die der Fahrer des Schleppers 200 bei sich tragen kann, drahtlos ausgelöst werden.

Somit könnte der Fahrer das Schleppstangen-Fahrwerk 19 - in diesem Fall die um eine horizontale Schwenkachse 32' verschwenkbare Schwinge 32, an deren anderen Ende sich die Räder 20a, b befinden, wie in den **Figuren 2a** **und** **3a** dargestellt - in die aktivierte Stellung ausfahren, ohne die Fahrerkabine 201 des Schleppers 200 verlassen zu müssen und natürlich ebenso das Einfahren des Schleppstangen-Fahrwerks 19 in die deaktivierte Stellung, der die Räder 20a, b keinen Kontakt zum Untergrund 400 mehr haben.

Ferner können die Räder 20a, b mittels eines elektrischen Antriebsmotors 24 angetrieben werden, der vorzugsweise funktionsvereinigt mit dem Generator 23 als E-Maschine ausgebildet ist und vorzugsweise wieder in wenigstens einem der Räder 20a, b als Radnaben-Maschine sitzt.

Ein Betätigungselement 24a zum Ingangsetzen des Antriebsmotors 24 und auch Wahl der Drehrichtung der Räder 20a, b befindet sich wiederum in einer Fernbedienung 35 oder - dann mehrere Betätigungselemente 24a - befestigt an der Außenseite der Schleppstange 100, vorzugsweise an oder in der Nähe jedes der Handgriffe 15, die in beiden Endbereichen der Schleppstange 100 zum Ergreifen, Hochheben und bisher manuellen Verfahren der Schleppstange 100 vorhanden sind in vorzugsweise einer solchen Position, dass sie von der den Handgriff 15 haltenden Hand des Bedieners betätigt werden können.

Vorzugsweise umfasst die Schleppstange eine elektrische oder elektronische Steuerung 29, mit der alle motorisch betätigten Funktionen der Schleppstange 100 angesteuert werden, und mit der dann auch die Betätigungselemente 24a, 25a, sowie die Motoren 24 und 25 signaltechnisch verbunden sind.

Um den Betrieb der Schleppstange weiter zu vereinfachen und zu automatisieren, kann die Schleppstange auch Sensoren - wie beispielsweise in den **Figuren 2a** **und** **4a** dargestellt - aufweisen, die dann ebenfalls mit der Steuerung 29 signaltechnisch verbunden sind und deren Messergebnisse für den Bediener die Bedienung erleichtern:
So kann die Schleppstange 100 einen Status-Sensors 36a umfassen, beispielsweise integriert in den Motor 25b der Ausfahr-Vorrichtung 25, welcher detektiert, ob die Räder 20a, b des Schleppstange-Fahrwerks 19 Kontakt mit dem Untergrund 400 haben oder nicht.

Dies kann beispielsweise mittels Messen der Stromaufnahme des Ausfahr-Motors 25b beim weiteren Ausfahren des Schleppstange-Fahrwerks 19 ermittelt werden.

An der Flugzeug-Kupplung 14 kann ferner ein Differenz-Sensors 36b angeordnet sein, der beim Annähern an die Kupplung am Bugfahrwerk 301 die Höhendifferenz und/oder den Seitenversatz zwischen der Flugzeug-Kupplung 14 der Schleppstange 100 und dem entsprechenden Kupplungsteil am Bugfahrwerk 301 misst, sodass der Bediener durch entsprechendes Verändern der Höhenlage und/oder der Position der Flugzeug-Kupplung 14 in Querrichtung 11 die beiden in Übereinstimmung bringen kann, wodurch das Ankuppeln erleichtert wird.

Ferner kann an der Schleppstange 100 ein oder mehrere Höhen-Sensoren 36c vorhanden sein, die die Höhe der Schleppstange 100 an der Position des Höhen-Sensors 36c über dem Untergrund 400 messen.

Bei alleinstehender oder im nur einseitig angekoppelten Zustand der Schleppstange 100 stellt dies auch die Abstütz-Höhe dar, weshalb bei Verwendung nur eines einzigen Höhen-Sensors 36c dieser vorzugsweise nahe am Schleppstangen-Fahrwerk 19, insbesondere nahe der Längsposition von dessen Rädern 20a, b, angeordnet ist, vorzugsweise auf der Unterseite der Basisstange 1a.

In Längsrichtung 10 beabstandet können jedoch auch mehrere solche Höhen-Sensoren 36c vorhanden sein, beispielsweise wie in **Figur 4a** dargestellt je einer in den beiden Endbereichen der Schleppstange 100, insbesondere deren Basisstange 1a, und/oder in deren mittleren Längenbereich.

Aus der Differenz der Höhenmessung von zwei verschiedenen in Längsrichtung 10 beabstandeten Höhen-Sensoren36c kann die Steuerung 29 auch die Neigung der Schleppstange 100, also deren Längsrichtung 10, gegenüber dem Untergrund 400 ermitteln.

Dies ist besonders dann sinnvoll, wenn die Neigung, insbesondere motorisch, einstellbar ist wie mittels der beiden unabhängig voneinander ansteuerbaren Schleppstangen-Fahrwerke 19, wie bei der Bauform gemäß **Figur 4a****,** **b** gegeben.

Falls dort auch ein Höhen-Sensors 36c im mittleren Bereich vorhanden ist, ist dieser vorzugsweise in Längsrichtung 10 in der Mitte zwischen den beiden Schwenkachsen 32' der beiden Schwingen 32 positioniert.

Die von den Sensoren ermittelten Werte müssen dem Bediener zur Verfügung gestellt werden, was vorzugsweise optisch mittels einer Anzeigevorrichtung 37 erfolgt, die vorzugsweise an der in **Figur 2a** **und** **4a** dargestellten Fernbedienung 35 eingebaut sein kann, oder auch fest montiert im Schlepper 200 oder gar an der Schleppstange 100 selbst angeordnet sein kann.

Der elektrische Akku 4 ist geschützt im Inneren des Basisrohres 1a untergebracht, wobei elektrische Anschlüsse 9 zum Laden des Akkus 4 auf der Außenseite des Basisrohres 1a vorhanden und erreichbar sind. Der Akku 4 ist entweder aus Zugänglichkeitsgründen nahe des Schlepper-seitigen Endes angeordnet oder für den Erhalt eines mittigen Schwerpunktes der Schleppstange 100 oberhalb der Räder 20a, b des Schleppstangen-Fahrwerks 19 angeordnet.

Um den Akku 4 nicht von außen nachladen zu müssen, können die Räder des Schleppstangen-Fahrwerks 19 mit einem elektrischen Generator 23 gekoppelt sein, der beim Fahren der Räder 20a, b auf dem Untergrund Strom erzeugt und darüber den Akku 4 nachlädt, und der in **Figur 2b** sogar bei jedem der Räder 20a, b separat als Radnaben-Generator 23 dargestellt ist.

Da die Schleppstange 100 nun über eine eigene Stromversorgung verfügt, können auch weitere elektrische Ausstattungen an der Schleppstange vorhanden sein, beispielsweise eine Wahnvorrichtung 6, die ermittelt, ob mittels der am Flugzeug 300 angekoppelten Schleppstange 100 momentan Kräfte in das Bugfahrwerk 301 des Flugzeuges 300 eingebracht werden, die so hoch sind, dass sie bei weiterer Steigerung ein Brechen der Scherstifte 3 bewirken würden, die als Sollbruchstelle den Grundkörper 1 der Schleppstange 100 mit deren Schleppkopf 2 verbinden, wie eingangs bereits dargelegt.

Zu diesem Zweck steht die Warnvorrichtung 6 mit einer Kraftmess-Vorrichtung 5 in Verbindung, welche ein oder mehrere Kraft-Sensoren 5a umfasst und die von den einzelnen Sensoren 5a gemessenen Kräfte in Form eines elektrischen Signals an die Warnvorrichtung 6 meldet. Die Warnvorrichtung vergleicht die an den einzelnen Kraft-Sensoren 5a gemessenen Kräfte mit einem oder mehreren vorgegebenen, in der Warnvorrichtung gespeicherten Grenzwerten, und führt eine entsprechende Warnreaktion aus.

Als Kraft-Sensoren 5a könnten im einfachsten Fall passive Sensoren wie etwa Dehnmessstreifen 34 auf ein oder mehreren Teilen der Schleppstange 100, beispielsweise der Außenfläche oder auch Innenfläche des Zentralrohres 1a, möglichst in der Nähe der Warnvorrichtung 6, aufgebracht werden, wie in **Figur 2a****,** **2b** dargestellt, die dann mittels kurzer elektrischer Leitungen mit der Warnvorrichtung 6 verbunden sind.

Elektrische Energie wird dann lediglich zum Auswerten und gegebenenfalls Weiterleiten der Signale durch die Messvorrichtung 5 sowie zum Betreiben der Warnvorrichtung 6 benötigt wird.

Solche, vor allem an der Außenseite aufgebrachte, Kraft-Sensoren 5a werden jedoch leicht beschädigt und sind deshalb höchstens zusätzlich vorgesehen.

Häufig werden deshalb aktive elektrische Kraft-Sensoren 5a, die zum Messen eine Stromversorgung benötigen, eingesetzt.

Bevorzugt werden als Kraft-Sensoren 5a Lastmessbolzen 7 verwendet, die den Kraft-Sensor 5a beinhalten, und die auf den Lastmessbolzen 7 einwirkende Kraft messen, und dabei handelt es sich meist um aktive, eine Stromversorgung benötigen der, Lastmessbolzen 7.

Die Messsignale gelangen dabei vom Lastmessbolzen 7 entweder über Kabel, vorzugsweise jedoch über einen mit dem Kraft-Sensor 5a gekoppelten Sender 5b drahtlos, vorzugsweise mittels Funksignalen, zu der Warnvorrichtung 6, vor allem, wenn sich der Lastmessbolzen 7 nicht am oder im Basisrohr 1a befindet.

Eine erste Möglichkeit besteht darin, einen solchen Lastmessbolzen 7 direkt als Scherstift 3 einzusetzen, dessen Belastung somit direkt und ständig überwacht wird und mit einem vorgegebenen Grenzwert, beispielsweise der Bruchlast des Scherstiftes 3, von der Warnvorrichtung 6 verglichen werden kann.

Der Nachteil besteht darin, dass die ohnehin in der Herstellung komplexen Scherstifte 3 zusätzlich mit dem Kraft-Sensor 5a und dem Sender 5b ausgestattet werden müssen, was die Herstellung der Scherstifte 3 stark verteuert.

Ein solcher Lastmessbolzen 7 kann jedoch auch an jeder anderen Stelle in der Schleppstange 100 eingesetzt werden, an der die in der Schleppstange 7 vorliegende Belastung, insbesondere die Längskraft, ebenfalls auftritt, von der dann, meist rechnerisch, auf die im Scherstift 3 vorliegende Belastung geschlossen werden muss.

Eine zweite Möglichkeit besteht deshalb darin, wenigstens eine der Verbindungsschrauben 31 zwischen den Basisplatten 1b2 und dem Basisblock 1b3 des Schleppkopfes 2 als Lastmessbolzen 7 auszuführen.

Eine dritte Möglichkeit besteht darin, eine oder mehrere der Verbindungsschrauben 30, durch welche das Basisrohr 1a und die Schleppkopf-Aufnahme 1b, insbesondere konkret die beiden Flanschplatten 1a1 und 1b1 gegeneinander verschraubt werden, als solche Lastmessbolzen 7 auszuführen.

Der Vorteil bei Einsatz der Lastmessbolzen 7 an dieser Stelle besteht darin, dass dann ohne großen Aufwand auch eine Kabelverbindung von der Flanschplatte 1a1 zu der im Basisrohr 1a befindlichen Warnvorrichtung 6 im geschützten Inneren des Basisrohres 1a hergestellt werden kann, sodass kein Sender 5b notwendig ist.

Eine vierte Möglichkeit würde noch darin bestehen, den Kupplungsbolzen 204, der zum Ankuppeln der Schleppstange 100 am Kupplungsmaul 203 des Schleppers 200 dient, als Kraftlastmessbolzen 7 auszuführen, vor allem dann, wenn der Kupplungsbolzen 204 nicht manuell gehandhabt wird, sondern mittels eines Kupplungs-Antriebes 205, der meist am Schlepper oder stattdessen auch an der Schleppstange 100 vorhanden ist und manuell oder von der Steuerung 202 des Schleppers 200 aus angesteuert motorisch bewegt wird.

Natürlich können die Lastmessbolzen 7 auch an mehreren der genannten Stellen eingesetzt werden, und die Messvorrichtung 5 ggfs. auch noch zusätzlich Kraft-Sensoren 5a in anderer Form, insbesondere in Form von Dehnmessstreifen 34, umfassen, um eine möglichst redundante Kraftmessung und Auswertung durch die Warnvorrichtung 6 zu ermöglichen.

Als Alarmgeber 6b kann als akustischer Alarmgeber eine Hupe oder eine Sirene dienen, die vorzugsweise an der Schleppstange 100 angeordnet ist und ein akustisches Signal abgibt. Ebenfalls an der Schleppstange 100 kann auch ein optischer Alarmgeber 6b in Form von Lampen oder Leuchtdioden vorhanden sein, wobei sich beides auch - insbesondere zusätzlich - in der Fahrerkabine 201 des Schleppers 200 befinden kann, um den darin sitzenden Fahrer darauf aufmerksam zu machen.

Vorzugsweise ist in der Fahrerkabine 201 auch ein Display 6a vorhanden, auf dem als optischem Alarmgeber 6b die Werte der von der Kraftmess-Vorrichtung 5 gemessenen Kräfte und / oder diese Kräfte in Relation zu einem vorgegebenen Grenzwert, insbesondere der Bruchspannung des momentan verwendeten Scherstiftes 3, angezeigt werden kann, etwa mittels der üblichen Farbcodierung grün, gelb, rot für die Stufen unkritisch, nahe am kritischen Bereich, kritisch.

Die **Figuren 4a****, b** zeigen eine zweite Bauform der Erfindung, mit der sich - auch bei abgekoppelter, alleinstehender Schleppstange 100 - nicht nur die Abstützhöhe im Bereich der einen vorhandenen Ausfahr-Vorrichtung 25 verändern lässt, sondern auch die Schleppstange 100 in ihrer Neigung zum Untergrund 400 einstellen lässt, beispielsweise parallel zum Untergrund 400.

Zu diesem Zweck sind im mittleren Längenbereich der Schleppstange 100 an dem Basisrohr 1a nicht nur wie bisher eine solche Ausfahr-Vorrichtung 25 sondern deren zwei, in Längsrichtung 10 beabstandet, vorhanden, deren Abstützhöhe sich unabhängig voneinander einstellen lässt.

Dementsprechend ist für jede der beiden Ausfahr-Vorrichtungen 25 ein eigenes Betätigungs-Element 25a oder je zwei solcher Betätigungselemente 25a - für Ausfahren oder Einfahren getrennt - vorhanden, beispielsweise an der Fernbedienung 35, wie in **Figur 4a** dargestellt.

Die Ausfahr-Vorrichtungen 25 sind die gleichen wie in der bisherigen Bauform, also mit einer um eine Schwenkachse 32' gegenüber dem Basisrohr 1a verschwenkbaren Schwinge 32, die an ihrem freien Ende die beiden auf einer gemeinsamen Rotationsachse liegenden Räder 20a, 20b tragen.

Die beiden Ausfahr-Vorrichtungen 25 sind in der Seitenansicht der **Figur 4a** betrachtet spiegelbildlich zueinander angeordnet, also mit den Schwenkachsen 32' in Längsrichtung 10 zueinander weisend, während die die Räder 20a, b tragenden freien Enden der beiden Schwingen 32 voneinander weg gerichtet sind.

Für die einzelnen Ausfahr-Vorrichtungen 25 gilt das zu den zu der bisherigen ersten Bauform Ausgeführte analog, ebenso wie für den Rest der Schleppstange 100.

### BEZUGSZEICHENLISTE

- 1: Grundkörper
- 1a: Basisstange
- 1b: Schleppkopf-Aufnahme
- 1a1, 1b1: Flanschplatte
- 1b2: Basis-Platte
- 1b3: Zentralblock
- 1c: Anhänge-Öse
- 2: Schleppkopf
- 2a: Zentralkörper
- 3: Scherstift
- 3a: Kopf
- 3b: Schaft
- 4: Akku
- 5: Kraftmess-Vorrichtung
- 5a: Kraftsensor
- 5b: Sender
- 6: Warnvorrichtung
- 6a: Display
- 6b: Alarmgeber
- 7: Last-Messbolzen
- 8: Positionssensor
- 8': Identifikationssensor
- 9: Stromanschluss
- 10: Längsrichtung
- 10': Längsmittel-Ebene
- 11: Querrichtung
- 12: Fangbolzen
- 13: Durchgangsöffnung
- 14: Flugzeug-Kupplung
- 14': Schlepper-Kupplung
- 15: Handgriff
- 16: Zentralöffnung
- 17: Schwenkgriff
- 18, 18': Sicherungsmutter
- 19: Schleppstangen-Fahrwerk
- 20a, b: Rad
- 21: Querbohrung
- 22: Sicherungsstift
- 23: Generator
- 24: Antriebsmotor
- 24a: Betätigungselement
- 25: Ausfahr-Vorrichtung
- 25a: Betätigungselement
- 25b: Ausfahr-Motor
- 26: Rinne
- 27: Schieber
- 28: Magazin
- 29: Betätigungs-Element
- 30: Verbindungs-Schraube
- 31: Verbindungs-Schraube
- 32: Schwinge
- 32': Schwenkachse
- 33: Pumphebel
- 34: Dehnmessstreifen
- 35: Fernbedienung
- 100: Schleppstange

- 200: Schlepper
- 201: Fahrerkabine
- 202: Steuerung, Fahrzeugsteuerung
- 203: Kupplungsmaul
- 204: Kupplungsbolzen
- 205: Kupplungsantrieb

- 300: Flugzeug
- 301: Bugfahrwerk
- 301a: Querbolzen

- 400: Untergrund, Boden

## Patentansprüche

1. **Schleppstange** (100) für das Schleppen oder Schieben von Luftfahrzeugen (300) an deren Bugfahrwerk (301) umfassend
- einen Grundkörper (1),
- einen Schleppkopf (2), wobei der Grundkörper (1) über wenigstens einen Scherstift (3) formschlüssig mit dem in Längsrichtung (10) daran anschließenden Schleppkopf (2) gekoppelt ist,
- wobei der Grundkörper (1) im vom Schleppkopf (2) abgewandten Endbereich, dem ersten freien Endbereich der Schleppstange (100), eine Schlepper-Kupplung (14') zum Ankuppeln eines Schleppers (200) aufweist und
- der Schleppkopf (2) in dem vom Grundkörper (1) abgewandten Endbereich, dem 2. freien Endbereich der Schleppstange (100), eine Flugzeug-Kupplung (14) zum Ankuppeln des Bugfahrwerks (301) des zu schleppenden Luftfahrzeuges (300) aufweist,
- ein Schleppstangen-Fahrwerk (19) mit wenigstens einem Paar von zwei Rädern (20a, b) sowie
- eine Ausfahr-Vorrichtung (25) zum Ausfahren der Räder (20a, b) relativ zum Grundkörper (1),
**dadurch gekennzeichnet, dass**
- die Ausfahr-Vorrichtung (25) einen elektrischen Ausfahr-Antrieb mit einem Ausfahr-Motor (25b) umfasst,
- die Schleppstange (100) eine Stromquelle umfasst als Energieversorgung des elektrischen Ausfahr-Antriebes,
- die Schleppstange (100) ein Betätigungselement (25a) zum Aktivieren des elektrischen Ausfahr-Antriebes umfasst.

2. Schleppstange nach Anspruch 1,
**dadurch gekennzeichnet, dass**
das Betätigungselement (25a)
- an der Schleppstange (100) befestigt ist
oder
- am Schlepper, insbesondere in der Fahrerkabine des Schleppers, befestigt ist
oder
- an einer tragbaren, nicht befestigten Fernbedienung (35) angeordnet ist.

3. Schleppstange nach einem der vorhergehenden Ansprüche,
**dadurch gekennzeichnet, dass**
- die Ausfahr-Vorrichtung (25) einen Status-Sensor (36a) umfasst, der das Kontaktieren des Schleppstangen-Fahrwerks (19) mit dem Untergrund (400) melden kann,
und/oder
- die Ausfahr-Vorrichtung (25) einen Differenz-Sensor (36b) umfasst, der
- bei Annäherung eines Kupplungs-Maules des Schleppers an eine KupplungsÖse der Schleppstange (100) die Höhen-Differenz zwischen beiden anzeigt
oder
- bei Annäherung der Kupplung des Bugfahrwerkes (301) an die Flugzeug-Kupplung (14) der Schleppstange (100) die Höhen-Differenz und Differenz-Richtung zwischen beiden anzeigt.

4. Schleppstange nach einem der vorhergehenden Ansprüche,
**dadurch gekennzeichnet, dass**
- die Ausfahr-Vorrichtung (25) einen Höhen-Sensor (36 c) aufweist sowie eine damit signaltechnisch verbundene Anzeige-Vorrichtung (37) umfasst, die die AufbockHöhe des Schleppstangen-Fahrwerks (100) anzeigt und die insbesondere in der Fahrerkabine (201) des Schleppers (200) angeordnet ist oder an der Fernbedienung (35)
und/oder
- die Ausfahr-Vorrichtung (25) am Basiskörper (1), insbesondere an der Basisstange (1a), angeordnet ist.

5. Schleppstange nach einem der vorhergehenden Ansprüche,
**dadurch gekennzeichnet, dass**
- wenigstens eines der Räder (20a, b) des Schleppstangen-Fahrwerks (19) mit einem Generator (23) wirkverbunden ist, der bei Drehen des Rades (20a, b) elektrische Energie erzeugen kann und der zum Einspeisen dieser elektrischen Energie mit dem Akku (4) verbunden ist.

6. Schleppstange nach einem der vorhergehenden Ansprüche,
**dadurch gekennzeichnet, dass**
- die Stromquelle, insbesondere der Akku (4), im Inneren des Basiskörpers (1) angeordnet ist
und/oder
- auf der Außenseite des Basisrohres (1a) ein Stromanschluss (9) zum Nachladen des Akkus (4) vorhanden ist.

7. Schleppstange nach einem der vorhergehenden Ansprüche,
**dadurch gekennzeichnet, dass**
- wenigstens eines der Räder (20a, b) des Schleppstangen-Fahrwerks (19) einen Fahr-Antrieb mit einem insbesondere elektrischen Antriebs-Motor (24) umfasst sowie ein Betätigungselement (24a), insbesondere an der Schleppstange (100) oder der Fernbedienung (35), um den Antriebsmotor (24) in Gang zu setzen, und
- der elektrische Antriebsmotor (24) insbesondere funktionsvereinigt ist mit dem elektrischen Generator (23).

8. Schleppstange nach einem der vorhergehenden Ansprüche,
**dadurch gekennzeichnet, dass**
an dem Grundkörper (1), insbesondere der Basisstange (1a) in Längsrichtung (10) beanstandet zwei Paare von Räder (20a, b) mit je einer Ausfahr-Vorrichtung (25) vorhanden sind, wobei die Ausfahr-Vorrichtung (25) unabhängig voneinander betätigbar sind, insbesondere unabhängig voneinander motorisch betätigbar sind.

9. Schleppstange nach einem der vorhergehenden Ansprüche,
**dadurch gekennzeichnet, dass**
- der Basiskörper (1) eine insbesondere rohrförmige Basisstange (1a) und eine daran insbesondere verschraubte Schleppkopf-Aufnahme (1b) umfasst, und an dem an der Schleppkopf-Aufnahme (1b) befestigten Schleppkopf (2) die Flugzeug-Kupplung (14) zum Ankuppeln des Bugfahrwerkes (301) angeordnet ist
- wobei insbesondere Schleppkopf-Aufnahme (1b) und Schleppkopf (2) über die Scherstifte (3) formschlüssig miteinander gekoppelt sind
und/oder
- die Kupplung des Schleppers (200) aus einen mittels Federkraft in die EinrastRichtung vorgespannten Kupplungsbolzen (204) und/oder einen elektrisch ein- und ausfahrbaren Kupplungsbolzen (204) umfasst.

10. **Verfahren** zum Betreiben einer Schleppstange (100) mit der elektrisch betriebenen Ausfahrvorrichtung (25) für das Schleppstangen-Fahrwerk (19)gemäß einem der vorhergehenden Ansprüche,
**dadurch gekennzeichnet, dass**
das Schleppstangen-Fahrwerk (19) elektrisch angehoben und abgesenkt wird, insbesondere gesteuert mittels eines vom Bediener betätigten Betätigungs-Elementes (25a).

11. Verfahren nach Anspruch 10,
**dadurch gekennzeichnet, dass**
die Räder (20a, b) des Schleppstangen-Fahrwerk (19) motorisch, insbesondere elektrisch, angetrieben werden, insbesondere gesteuert mittels eines vom Bediener betätigten Betätigungs-Elementes (24a).

12. Verfahren nach Anspruch 11 oder 10,
**dadurch gekennzeichnet, dass**
der Akku (4) zum Speichern der benötigten elektrischen Energie durch einen Generator (23) aufgeladen wird, der mit wenigstens einem der Räder (20a, b) des Schleppstangen-Fahrwerks (19) wirkverbunden ist.

13. Verfahren nach einem der vorhergehenden Verfahrensansprüche,
**dadurch gekennzeichnet, dass**
die Neigung des Schleppstangen-Fahrwerks (19) motorisch verändert wird, insbesondere gesteuert mittels eines vom Bediener betätigten Betätigungs-Elementes (25 a) zum Aktivieren des mindestens einen Ausfahr-Antriebes.

14. Verfahren nach einem der vorhergehenden Verfahrensansprüche,
**dadurch gekennzeichnet, dass**
für das Ankuppeln der Schleppstange (23) an einem Bugfahrwerk eines Luftfahrzeuges (300) der Fahrer des Schleppers vom Schlepper (200) aus
- den Schlepper (200) mit angehängter Schleppstange (100) und aktiviertem, ausgefahrenen Schleppstangen-Fahrwerk (19) bis nahe an das Bugfahrwerk (301) heranfährt,
- das Aktivierungselement zum Ausfahren des Schleppstangen-Fahrwerks (19) betätigt, bis sich die Flugzeug-seitige Flugzeug-Kupplung (14) etwa auf Höhe des Kupplungs-Gegenelementes am Bugfahrwerk (301) befindet,
- die Schleppstange (100) vom Schlepper (200) abkuppelt,
- die Schleppstange (100) zum Bugfahrwerk schiebt und die Flugzeug-Kupplung (14) der Schleppstange (100) an dem Kupplungs-Gegenelement des Bugfahrwerkes (301), insbesondere durch Verrasten, ankuppelt,
- den Schlepper (200) an die schlepperseitige Schlepper-Kupplung (14') der Schleppstange (100) heranfährt und die Schleppstange (100) ankuppelt,
- mittels der Ausfahrvorrichtung (25) das Schleppstangen-Fahrwerk (19) vom Boden (400) abhebt, insbesondere in die maximal angehobene, die aktivierte Position.

15. Verfahren nach einem der vorhergehenden Verfahrensansprüche,
**dadurch gekennzeichnet, dass**
für das Abkuppeln der Schleppstange (23) von einem Bugfahrwerk (301) der Fahrer des Schleppers (200)
- das Aktivierungselement zum Ausfahren des Schleppstangen-Fahrwerks (19) betätigt, bis die Räder (20a, b) des Schleppstangen-Fahrwerks 19 den Untergrund (400) berühren,
- den Schlepper (200) von der Schleppstange (100) abkuppelt und auf Abstand zu dieser bringt
- die Flugzeug-Kupplung (14) an der Schleppstange (100) löst/öffnet und außer Eingriff mit dem Kupplungs-Gegenelement des Bugfahrwerkes (301) bringt,
- die Schleppstange (100) vom Bugfahrwerk (301) auf Abstand bringt und mit der Schlepper-Kupplung (14') in Eingriff mit dem Kupplungs-Maul (203) des Schleppers (200) bringt und die Schleppstange (100) am Schlepper (200) ankuppelt,
- mittels des Schleppers (200) die angehängte Schleppstange (100) abtransportiert.

## Claims

1. Tow bar (100) for towing or pushing aircrafts (300) on their nose landing gear (301) comprising
- a base body (1),
- a drag head (2), the base body (1) being positively coupled via at least one shear pin (3) to the drag head (2) adjoining it in the longitudinal direction (10),
- the base body (1) having, in the end region facing away from the drag head (2), the first free end region of the tow bar (100), a towing coupling (14') for coupling a towing vehicle (200), and
- the drag head (2) has, in the end region facing away from the base body (1), the second free end region of the tow bar (100), an aircraft coupling (14) for coupling the nose gear (301) of the aircraft (300) to be towed,
- a tow bar landing gear (19) having at least one pair of two wheels (20a, b), and
- an extension device (25) for extending the wheels (20a, b) relative to the main body (1),
**characterized in that**
- the extension device (25) comprises an electric extension drive with an extension motor (25b),
- the tow bar (100) comprises a power source as power supply of the electric extension drive,
- the tow bar (100) comprises an actuating element (25a) for activating the electric extension drive.

2. Tow bar according to claim 1,
**characterized in that**
the actuating element (25a)
- is attached to the tow bar (100)
or
- is fastened to the tractor, in particular in the driver's cab of the tractor
or
- is arranged on a portable, non-fixed remote control (35).

3. Tow bar according to one of the preceding claims,
**characterized in that**
- the extension device (25) comprises a status sensor (36a) that can report contact of the tow bar chassis (19) with the ground (400),
and/or
- the extension device (25) comprises a difference sensor (36b), which can
- when a coupling jaw of the tractor approaches a coupling eye of the tow bar (100), indicates the difference in height between the two
or
- when the coupling of the nose gear (301) approaches the aircraft coupling (14) of the tow bar (100), indicates the height difference and difference direction between the two.

4. Tow bar according to any of the preceding claims,
**characterized in that**
- the extension device (25) has a height sensor (36c) and comprises a display device (37) which is connected signally thereto, indicates the jacking height of the tow bar chassis (19) and is arranged in particular in the driver's cab (201) of the tractor (200) or on the remote control (35)
and/or
- the extension device (25) is arranged on the base body (1), in particular on the base rod (1a).

5. Tow bar according to one of the preceding claims,
**characterized in that**
- at least one of the wheels (20a, b) of the tow bar chassis (19) is operatively connected to a generator (23) which can generate electrical energy when the wheel (20a, b) rotates and which is connected to the battery (4) for feeding in this electrical energy.

6. Tow bar according to any one of the preceding claims,
**characterized in that**
- the current source, in particular the battery (4), is arranged inside the base body (1)
and/or
- a power connection (9) for recharging the rechargeable battery (4) is provided on the outside of the base tube (1a).

7. Tow bar according to any of the preceding claims,
**characterized in that**
- at least one of the wheels (20a, b) of the tow bar chassis (19) comprises a travel drive with, in particular, an electric drive motor (24), and an actuating element (24a), in particular on the tow bar (100) or the remote control (35), for starting the drive motor (24), and
- the electric drive motor (24) is in particular functionally united with the electric generator (23).

8. Tow bar according to any one of the preceding claims,
**characterized in that**
two pairs of wheels (20a, b), each with an extension device (25), are provided on the base body (1), in particular the base rod (1a), in the longitudinal direction (10), wherein the extension devices (25) can be actuated independently of one another, in particular can be motor-actuated independently of one another.

9. Tow bar according to any one of the preceding claims,
**characterized in that**
- the base body (1) comprises a base rod (1a), in particular a tubular base rod, and a tow head receptacle (1b), in particular screwed thereto, and the aircraft coupling (14) for coupling the nose landing gear (301) is arranged on the drag head (2) fastened to the tow head receptacle (1b),
- wherein in particular the tow head mount (1b) and the drag head (2) are positively coupled to one another via the shear pins (3),
and/or
- the coupling of the tractor (200) comprises a coupling pin (204) biased by means of spring force in the engagement direction and/or an electrically retractable and extendable coupling pin (204).

10. Method of operating a tow bar (100) with the electrically operated extension device (25) for the tow bar chassis (19) according to any one of the preceding claims,
**characterized in that**
the tow bar chassis (19) is raised and lowered electrically, in particular controlled by means of an actuating element (25a) operated by the operator.

11. Method according to claim 10,
**characterized in that**
the wheels (20a, b) of the tow bar chassis (19) are driven by a motor, in particular electrically, in particular controlled by means of an actuating element (24a) actuated by the operator.

12. Method according to claim 11 or 10,
**characterized in that**
the battery (4) for storing the required electrical energy is charged by a generator (23) which is operatively connected to at least one of the wheels (20a, b) of the tow-bar chassis (19).

13. Method according to one of the preceding method claims,
**characterized in that**
the inclination of the tow bar chassis (19) is varied by motor, in particular controlled by means of an actuating element (25a) actuated by the operator for activating the at least one extension drive.

14. Method according to one of the preceding method claims,
**characterized in that**
for coupling the tow bar (100) to a nose gear of an aircraft (300), the operator of the tractor from the tractor (200)
- drives the tractor (200) with the tow bar (100) attached and the activated, extended tow bar chassis (19) up to close to the nose landing gear (301),
- actuate the activation element for extending the tow bar chassis (19) until the aircraft-side aircraft coupling (14) is approximately at the level of the coupling counter-element on the nose landing gear (301),
- uncouples the tow bar (100) from the tractor (200),
- pushes the tow bar (100) to the nose landing gear and couples the aircraft coupling (14) of the tow bar (100) to the coupling counter-element of the nose landing gear (301), in particular by latching,
- moves the tractor (200) up to the tractor-side coupling (14') of the tow bar (100) and couples the tow bar (100),
- by means of the extension device (25), the tow bar chassis (19) is raised from the ground (400), in particular to the maximum raised, the activated position.

15. Method according to one of the preceding method claims,
**characterized in that**
for uncoupling the tow bar (23) from a nose landing gear (301), the driver of the tractor (200)
- actuates the activation element for extending the tow bar landing gear (19) until the wheels (20a, b) of the tow bar landing gear 19 contact the ground (400),
- uncouples the tractor (200) from the tow bar (100) and brings it to a distance from the latter,
- disengage/open the aircraft coupling (14) on the tow bar (100) and disengage it from the coupling mating element of the nose gear (301),
- spaces the tow bar (100) from the nose gear (301) and brings it with the tractor coupling (14') into engagement with the coupling jaw (203) of the tractor (200) and couples the tow bar (100) to the tractor (200),
- transports the trailed tow bar (100) away by means of the tractor (200).

## Revendications

1. **Barre de remorquage** (100) pour remorquer ou pousser des avions (300) sur leur train d'atterrissage avant (301), comprenant
- un corps de base (1),
- une tête de remorquage (2), le corps de base (1) étant accouplé par complémentarité de forme par l'intermédiaire d'au moins une goupille de cisaillement (3) à la tête de remorquage (2) qui lui est adjacente dans la direction longitudinale (10),
- le corps de base (1) comportant, dans la région d'extrémité opposée à la tête de remorquage (2), la première région d'extrémité libre de la barre de remorquage (100), un accouplement de remorquage (14') pour accoupler un remorqueur (200), et
- la tête de remorquage (2) présente, dans la région d'extrémité opposée au corps de base (1), la deuxième région d'extrémité libre de la barre de remorquage (100), un accouplement d'avion (14) pour accoupler le train d'atterrissage avant (301) de l'avion (300) à remorquer,
- un train d'atterrissage de la barre de remorquage (19) ayant au moins une paire de deux roues (20a, b), et
- un dispositif d'extension (25) pour étendre les roues (20a, b) par rapport au corps de base (1),
**caractérisé en ce que**
- le dispositif d'extension (25) comprend un entraînement d'extension électrique avec un moteur d'extension (25b),
- la barre de remorquage (100) comprend une source d'énergie en tant qu'alimentation électrique de l'entraînement d'extension électrique,
- la barre de remorquage (100) comprend un élément d'actionnement (25a) pour activer l'entraînement d'extension électrique.

2. Barre de remorquage selon la revendication 1, **caractérisée en ce que** l'élément d'actionnement (25a)
- est fixé à la barre de remorquage (100)
ou
- est fixé au remorqueur, en particulier dans la cabine de conducteur du remorqueur
ou
- est disposé sur une télécommande portable et non fixe (35).

3. Barre de remorquage selon l'une des revendications précédentes,
**caractérisée en ce que**
- le dispositif d'extension (25) comprend un capteur d'état (36a) adapté pour signaler le contact du train d'atterrissage de la barre de remorquage (19) avec le sol (400),
et/ou
- le dispositif d'extension (25) comprend un capteur de différence (36b) qui
- à l'approche d'un museau d'accouplement du remorqueur sur un anneau d'accouplement de la barre de remorquage (100), indique la différence de hauteur entre les deux
ou
- à l'approche de l'accouplement du train d'atterrissage avant (301) à l'accouplement d'avion (14) de la barre de remorquage (100), indique la différence de hauteur et la direction de la différence entre les deux.

4. Barre de remorquage selon l'une des revendications précédentes, **caractérisée en ce que**
- le dispositif d'extension (25) présente un capteur de hauteur (36c) et comprend un dispositif d'affichage (37) relié à celui-ci par une technique de signalisation, qui indique la hauteur de levage du train d'atterrissage de la barre de remorquage (19) et qui est disposé en particulier dans la cabine de conducteur (201) du remorqueur (200) ou sur la télécommande (35), et/ou
- le dispositif d'extension (25) est disposé sur le corps de base (1), en particulier sur la barre de base (1a).

5. Barre de remorquage selon l'une des revendications précédentes,
**caractérisée en ce que**
- au moins l'une des roues (20a, b) du train d'atterrissage de la barre de remorquage (19) est reliée fonctionnellement à un générateur (23) qui peut générer de l'énergie électrique lorsque la roue (20a, b) tourne et qui est relié à la batterie (4) pour alimenter cette énergie électrique.

6. Barre de remorquage selon l'une des revendications précédentes,
**caractérisée en ce que**
- la source d'énergie électrique, en particulier l'accumulateur (4), est disposée à l'intérieur du corps de base (1)
et/ou
- une connexion d'alimentation (9) pour recharger la batterie (4) est prévue sur l'extérieur du tube de base (1a).

7. Barre de remorquage selon l'une quelconque des revendications précédentes,
**caractérisée en ce que**
- au moins une des roues (20a, b) du train d'atterrissage de la barre de remorquage (19) comprend en particulier un moteur d'entraînement électrique (24), et un élément d'actionnement (24a), en particulier sur la barre de remorquage (100) ou la télécommande (35), pour démarrer le moteur d'entraînement (24), et
- le moteur d'entraînement électrique (24) est, en particulier, uni fonctionnellement au générateur électrique (23).

8. Barre de remorquage selon l'une des revendications précédentes,
**caractérisée en ce que**
deux paires de roues (20a, b) avec chacune un dispositif d'extension (25) sont prévues sur le corps de base (1), en particulier sur la barre de base (1a), à distance l'une de l'autre dans la direction longitudinale (10), les dispositifs d'extension (25) pouvant être actionnés indépendamment l'un de l'autre, en particulier pouvant être actionnés par moteur indépendamment l'un de l'autre.

9. Barre de remorquage selon l'une des revendications précédentes,
**caractérisée en ce que**
- le corps de base (1) comprend une barre de base (1a), en particulier une barre de base tubulaire, et un logement de tête de remorquage (1b), en particulier vissé sur celle-ci, et l'accouplement d'avion (14) pour l'accouplement du train d'atterrissage avant (301) est disposé sur la tête de remorquage (2) fixée sur le logement de la tête de remorquage (1b),
- dans lequel, en particulier, le logement de la tête de remorquage (1b) et la tête de remorquage (2) sont accouplés par complémentarité de forme l'un à l'autre au moyen des goupilles de cisaillement (3),
et/ou
- l'accouplement du remorqueur (200) comprend une broche d'accouplement (204) sollicitée dans la direction d'engagement au moyen d'une force de ressort et/ou une broche d'accouplement (204) qui peut être rétractée et étendue électriquement.

10. **Procédé** pour opérer une barre de remorquage (100) avec le dispositif d'extension (25) opéré électriquement pour le train d'atterrissage de la barre de remorquage (19) selon l'une des revendications précédentes,
**caractérisé en ce que**
la barre de remorquage (19) est levé et abaissé électriquement, en particulier commandé au moyen d'un élément d'actionnement (25a) actionné par l'opérateur.

11. Procédé selon la revendication 10,
**caractérisé en ce que**
les roues (20a, b) du train d'atterrissage de la barre de remorquage (19) sont entraînées par un moteur, en particulier électrique, en particulier commandé au moyen d'un élément d'actionnement (24a) actionné par l'opérateur.

12. Procédé selon la revendication 11 ou 10,
**caractérisé en ce que**
la batterie (4) pour stocker l'énergie électrique requise est chargée par un générateur (23) qui est connecté de manière opérationnelle à au moins une des roues (20a, b) du train d'atterrissage de la barre de remorquage (19).

13. Procédé selon l'une des revendications de procédé précédentes, **caractérisé en ce que**
l'inclinaison du train d'atterrissage de la barre de remorquage (19) est modifiée par un moteur, en particulier commandée au moyen d'un élément d'actionnement (25a) actionné par l'opérateur pour activer ledit au moins un entraînement d'extension.

14. Procédé selon l'une des revendications de procédé précédentes, **caractérisé en ce que**,
pour accoupler la barre de remorquage (23) à un train d'atterrissage avant d'un avion (300), le conducteur du remorqueur, à partir du remorqueur (200)
- conduit le remorqueur (200) avec la barre de remorquage (100) attachée et le train d'atterrissage de la barre de remorquage (19) activé et déployé jusqu'à proximité du train d'atterrissage avant (301),
- actionne l'élément d'activation pour déployer le train d'atterrissage de la barre de remorquage (19) jusqu'à ce que l'accouplement d'avion côté avion (14) se trouve approximativement sur la hauteur du contre-élément d'accouplement du train d'atterrissage avant (301),
- désaccouple la barre de remorquage (100) du remorqueur (200),
- pousse la barre de remorquage (100) vers le train d'atterrissage avant et accouple l'accouplement d'avion (14) de la barre de remorquage (100) au contre-élément d'accouplement du train d'atterrissage avant (301), notamment par encliquetage,
- déplace le remorqueur (200) jusqu'à l'accouplement (14') côté remorqueur de la barre de remorquage (100) et accouple la barre de remorquage (100),
- au moyen du dispositif d'extension (25), soulève le train d'atterrissage de la barre de remorquage (19) du sol (400), en particulier dans la position relevée maximale, la position activée.

15. Procédé selon l'une des revendications précédentes,
**caractérisé en ce que,**
pour désaccoupler la barre de remorquage (100) d'un train d'atterrissage avant (301), le conducteur du remorqueur (200)
- actionne l'élément d'activation pour déployer le train d'atterrissage de la barre de remorquage (19) jusqu'à ce que les roues (20a, b) du train d'atterrissage de la barre de remorquage (19) touchent le sol (400),
- désaccouple le remorqueur (200) de la barre de remorquage (100) et l'amène à une certaine distance de cette dernière,
- désengage/ouvre l'accouplement d'avion (14) sur la barre de remorquage (100) et le désengage du contre-élément d'accouplement d'atterrissage avant (301),
- déplace la barre de remorquage (100) en l'éloignant du train d'atterrissage avant (301) et avec l'accouplement de remorqueur (14') en engagement avec le museau d'accouplement (203) du remorqueur (200) et accouple la barre de remorquage (100) au remorqueur (200),
- éloigne la barre de remorquage accouplée (100) au moyen du remorqueur (200).
